# EUROPEAN PATENT SPECIFICATION

(11) **EP 3 462 936 B1**
(45) Date of publication and mention of the grant of the patent: **14.04.2021**
(21) Application number: 17725990.0
(22) Date of filing: 30.05.2017
(51) Int. Cl.: A24D 1/20, A24F 40/465

(54) **AEROSOL GENERATING ARTICLE WITH HEAT DIFFUSER**
AEROSOLERZEUGUNGSARTIKEL MIT WÄRMEVERTEILER
ARTICLE DE GÉNÉRATION D'AÉROSOL AVEC DIFFUSEUR THERMIQUE

(30) Priority: 31.05.2016 EP 16172300
(43) Date of publication of application: 10.04.2019
(73) Proprietor: Philip Morris Products S.A., 2000 Neuchâtel (CH)
(72) Inventor: THORENS, Michel, 1510 Moudon (CH)
(74) Representative: Spencer, James Michael
(86) International application number: PCT/EP2017/063055
(87) International publication number: WO 2017/207580

(56) References cited:
- EP-A1- 2 412 396
- WO-A1-2013/098409
- WO-A1-2015/082651
- WO-A1-2015/176898
- WO-A1-2015/177247

## Description

The present invention relates to a heated aerosol-generating article for use with an aerosol-generating device, and to an aerosol-generating system comprising the aerosol-generating article and an aerosol-generating device.

One type of aerosol-generating system is an electrically operated aerosol-generating system. Known handheld electrically operated aerosol-generating systems typically comprise an aerosol-generating device comprising a battery, control electronics and an electric heater for heating an aerosol-generating article designed specifically for use with the aerosol-generating device. In some examples, the aerosol-generating article comprises an aerosol-forming substrate, such as a tobacco rod or a tobacco plug, and the heater contained within the aerosol-generating device is inserted into or around the aerosol-forming substrate when the aerosol-generating article is inserted into the aerosol-generating device.

In existing systems, it may be difficult to evenly heat the aerosol-forming substrate with the electric heater. This may lead to some areas of the aerosol-forming substrate being over-heated and may lead to some areas of the aerosol-forming substrate being under-heated. Both may make it difficult to maintain consistent aerosol characteristics. This may be a particular issue with aerosol-generating articles in which the aerosol-forming substrate is a liquid aerosol-forming substrate, since depletion of the aerosol-forming substrate may cause one or more parts of the aerosol-generating article to overheat.

WO2015/082651 A1 describes a heated aerosol-generating article for use with an aerosol-generating device comprises a plurality of components including an aerosol-forming substrate assembled within a wrapper to form a rod having a mouth end and a distal end upstream from the mouth end. A rigid hollow tube is disposed upstream from the aerosol-forming substrate within the wrapper. A pierceable film, for example a pierceable polymer film or metallic film, spans one end of the rigid hollow tube. The rigid hollow tube is substantially non-flammable and acts to lower the risk of the aerosol-forming substrate being ignited if a flame is held to the distal end of the article.

It would be desirable to provide an aerosol-generating article that facilitates even heating of an aerosol-forming substrate.

According to a first aspect of the present invention there is provided an article as set out in claim 1.

Advantageously, in use, the heat diffuser absorbs heat from a heating element and transfers it to air drawn through the heat diffuser so that the air can heat the aerosol-forming substrate downstream of the heat diffuser primarily by convection. This may provide more even heating of the aerosol-forming substrate relative to existing systems in which the aerosol-forming substrate is heated primarily by conduction from the heating element. For example, it may reduce or prevent areas of local high temperature, or "hot spots", from occurring in the aerosol-forming substrate that may otherwise be caused by conductive heating. This may be of particular benefit when the aerosol-forming substrate is a liquid aerosol-forming substrate, since the heat diffuser may help to prevent overheating that may otherwise result from depletion of the aerosol-forming substrate. For example, where the aerosol-forming substrate comprises a liquid aerosol-forming substrate held in a liquid retention medium, the heat diffuser may help to reduce or prevent overheating of the aerosol-forming substrate or the liquid retention medium , even when it is dry.

Additionally, by providing the heat diffuser as part of the aerosol-generating article, the heat diffuser may be easily disposed of along with the aerosol-generating article. This may be advantageous over systems in which a heat diffuser is separate from the aerosol-generating article, since the heat diffuser is replaced with a new one each time the article is replaced thus preventing over use.

As used herein, the term "heated aerosol-generating article" refers to an article comprising an aerosol-generating substrate that, when heated, releases volatile compounds that can form an aerosol.

The aerosol-generating article is preferably configured to be removably coupled to an aerosol-generating device. The article may be disposable or reusable.

As used herein, the term "porous" is intended to encompass materials that are inherently porous as well as substantially non-porous materials that are made porous or permeable through the provision of a plurality of holes. The porous body is formed from a plug of porous material, for example a ceramic or metal foam. Alternatively, the porous body may be formed from a plurality of solid elements between which a plurality of apertures are provided. For example, the porous body may comprise a bundle of fibres, or a lattice of interconnected filaments. The porous material must have pores of a sufficient size that air can be drawn through the porous body through the pores. For example, the pores in the porous body may have an average transverse dimension of less than about 3.0 mm, more preferably less than about 1.0 mm, most preferably less than about 0.5 mm. Alternatively or in addition, the pores may have an average transverse dimension that is greater than about 0.01 mm. For example, the pores may have an average transverse dimension that is between about 0.01 mm and about 3.0 mm, more preferably between about 0.01 mm and about 1.0 mm, and most preferably between about 0.01 mm and about 0.5 mm.

As used herein, the term "pores" relates to regions of a porous article that are devoid of material. For example, a transverse area of porous body will comprise portions of the material forming the body and portions that are voids between the portions of material.

The average transverse dimension of the pores is calculated by taking the average of the smallest transverse dimension of each of the pores. The pore sizes may be substantially constant along the length of the porous body. Alternatively, the pore sizes may vary along the length of the porous body.

As used herein, the term "transverse dimension" refers to a dimension that is in a direction which is substantially perpendicular to the longitudinal direction of the porous body or of the aerosol-generating article.

The porosity distribution of the porous body may be substantially uniform. That is, the pores within the porous body may be distributed substantially evenly over the transverse area of the porous body. The porosity distribution may differ across the transverse area of the porous body. That is, the local porosity in one or more sub-areas of the transverse area may be greater than the local porosity in one or more other sub-areas of the transverse area. For example, the local porosity in one or more sub-areas of the transverse area may be between 5 percent and 80 percent greater than the local porosity in one or more other sub-areas of the transverse area. This may enable a flow of air through the porous body to be

As used herein, the term "transverse area " relates to an area of the porous body that is in a plane generally perpendicular to the longitudinal dimension of the porous body. For example, the porous body may be a rod and the transverse area may be a cross-section of the rod taken at any length along the rod, or the transverse area may be an end face of the rod.

As used herein, the term "porosity" refers to the volume fraction of void space in a porous article. As used herein, the term "local porosity" refers to the fraction of pores within a sub-area of the porous body.

By varying the porosity distribution, air flow through the porous body may be altered as desired, for example to provide improved aerosol characteristics. For example, this porosity distribution may be varied according to the air flow characteristics of an aerosol-generating system, or the temperature profile of a heating element, with which the heat diffuser is intended for use.

In some examples, the local porosity may be lower towards a centre portion of the porous body. With this arrangement, the air flow through the centre portion of the porous body is decreased relative to the periphery of the porous body. This may be advantageous depending on the temperature profile of the heating element or on the airflow characteristics of the aerosol-generating system with which the heat diffuser is intended for use. For example, this arrangement may be of particular benefit when used with an internal heating element positioned in use towards a central portion of the heat diffuser, since it may allow for increased heat transferfrom the heating element to the porous body.

In other examples, the local porosity may be greater towards a centre portion of the porous body. This arrangement may enable increased air flow through the centre of the porous body and may be advantageous depending on the temperature profile of the heating element or on the airflow characteristics of the aerosol-generating system with which the heat diffuser is intended for use. For example, this arrangement may be of particular benefit when used with an external heating element positioned in use around the periphery of the heat diffuser, since it may allow for increased heat transfer from the heating element to the porous body .

The porous body may be formed from a heat storage material.

As used herein, the term "heat storage material" refers to a material having a high heat capacity. With this arrangement, the porous body may act as a heat reservoir, allowing the heat diffuser to absorb and store heat from the heating element and to subsequently release the heat over time to the aerosol-forming substrate, via air drawn through the porous body.

Where the porous body is formed from a heat storage material, preferably, the porous body is formed from a material having a specific heat capacity of at least 0.5 J/g.K, preferably at least 0.7 J/g.K, more preferably at least 0.8 J/g.K at 25 degrees Celsius and constant pressure. As the specific heat capacity of a material is effectively a measure of the material's ability to store thermal energy, forming the porous body from a material having a high heat capacity may allow the porous body to provide a large heat reservoir for heating air drawn through the heat diffuser without substantially increasing the weight of an aerosol-generating system with which the heat diffuser is intended for use.

The porous body may be formed from any suitable material or materials. Where the porous body is formed from a heat storage material, suitable materials include, but are not limited to, glass fibre, glass mat, ceramic, silica, alumina, carbon, and minerals, or any combination thereof.

The heat storage material may be thermally insulating. As used herein, the term "thermally insulating" refers to a material having a thermal conductivity of less than 100 W/m.K, preferably less than 40 W/m.K, or less than 10 W/m.K at 23 degrees Celsius and a relative humidity of 50%. This may result in a heat diffuser with a higher thermal inertia relative to thermally conductive heat diffusers to reduce variations in the temperature of air drawn through the porous body caused by temperature fluctuations in the heating element. This may result in more consistent aerosol characteristics.

The porous body may be thermally conductive. As used herein, the term "thermally conductive" refers to a material having a thermal conductivity of at least 10 W/m.K, preferably at least 40 W/m.K, more preferably at least 100 W/m.K at 23 degrees Celsius and a relative humidity of 50%. Where the porous body is thermally conductive, preferably, the porous body is formed from a material having a thermal conductivity of at least 40 W/m.K, preferably at least 100 W/m.K, more preferably at least 150 W/m.K, and most preferably at least 200 W/m.K at 23 degrees Celsius and a relative humidity of 50%.

Advantageously, this may reduce the thermal inertia of the heat diffuser and allow the temperature of the heat diffuser to quickly adjust to changes in the temperature of the heating element, for example where the heating element is heated according to a heating regime which changes over time, while still allowing the air drawn through the porous body to be evenly heated. Further, by having a high thermal conductivity, the thermal resistance through the porous body will be lower. This may allow the temperature of portions of the porous body which are remote from the heating element in use to be at a similarly high temperature as the portions of the porous body which are closest to the heating element in use. This may provide for particularly efficient heating of air drawn through the porous body.

Where the porous body is thermally conductive, preferably, the porous body is formed from a material having a thermal conductivity of at least 40 W/m.K, preferably at least 100 W/m.K, more preferably at least 150 W/m.K, most preferably at least 200 W/m.K at 23 degrees Celsius and a relative humidity of 50%.

Where the porous body is thermally conductive, suitable thermally conductive materials include, but are not limited to, aluminium, copper, zinc, steel, silver, thermally conductive polymers, or any combination or alloy thereof.

In some embodiments, the porous body is formed from a heat storage material which is also thermally conductive, such as aluminium.

As porous bodies have a high surface-area-to-volume ratio, the heat diffuser may allow quick and efficient heating of air drawn through the porous body. This may allow for homogenous heating of air drawn through the porous body and, consequently, more even heating of an aerosol-forming substrate downstream of the heat diffuser.

In preferred embodiments, the porous body has a surface area-to-volume ratio of at least 20 to 1, preferably at least 100 to 1, more preferably of at least 500 to 1. Advantageously, this may provide a compact heat diffuser while allowing for particularly efficient transfer of thermal energy from the heating element to air drawn through the porous body. This may lead to quicker, and homogenous heating of air drawn through the porous body and, consequently, more even heating of an aerosol-forming substrate downstream of the heat diffuser relative to porous bodies having lower surface area to volume ratios.

In preferred embodiments, the porous body has a high specific surface area. This is a measure of the total surface area of a body per unit of mass. Advantageously, this may provide a low mass heat diffuser with a large surface area for efficient transfer of thermal energy from the heating element to air drawn through the porous body. For example, the porous body may have a specific surface area of at least 0.01 m² per gram, preferably at least 0.05 m² per gram, more preferably at least 0.1 m² per gram, most preferably at least 0.5 m² per gram.

The porous body preferably has an open cell porosity of between about 60 percent to about 90 percent void volume to material volume.

In some embodiments, the porous body has a low resistance to draw. That is, the porous body may offer a low resistance to the passage of air through the heat diffuser. In such examples, the porous body does not substantially affect the resistance to draw of an aerosol-generating system with which the heat diffuser is intended for use. In some embodiments, the resistance to draw (RTD) of the porous body is between about 10 to 130 mm H₂O, preferably between about 40 to 100 mm H₂O. The RTD of a specimen refers to the static pressure difference between the two ends of the specimen when it is traversed by an air flow under steady conditions in which the volumetric flow is 17.5 millilitres per second at the output end. The RTD of a specimen can be measured using the method set out in ISO Standard 6565:2002 with any ventilation blocked.

The porous body may be configured to be penetrated by an electric heating element forming part of an aerosol-generating device when the heat diffuser is coupled to the aerosol-generating device. The term "penetrated" is used to mean that the heating element at least partially extends into the porous body. Thus, the heating element may be sheathed within the porous body. With this arrangement, by the act of penetration, the heating element is brought into close proximity to, or contact with, the porous body. This may increase heat transfer between the heating element and the porous body and, consequently, to air drawn through the porous body relative to examples in which the porous body is not penetrated by the heating element.

The heating element may conveniently be shaped as a needle, pin, rod, or blade that may be inserted into the heat diffuser. The aerosol-generating device may comprise more than one heating element and in this description reference to a heating element means one or more heating elements.

The porous body may define a cavity or hole for receiving the electric heating element when the heat diffuser is coupled to the aerosol-generating device.

In any of the above embodiments, the porous body may be rigid.

The porous body may be pierceable by the heating element when the heat diffuser is coupled to the aerosol-generating device. For example, the porous body may comprise a foam, such as a polymer, metal or ceramic foam, that is pierceable by the heating element.

In any of the above embodiments, the electric heating element may be provided as part of an aerosol-generating device with which the heat diffuser is intended for use, or as part of the aerosol-generating article, for example as part of the heat diffuser.

In some embodiments, the aerosol-generating article may comprise an electric heating element thermally coupled to the porous body. In such embodiments, the porous body is arranged to absorb heat from the heating element and transfer it to air drawn through the porous body. With this arrangement, the heating element can be easily replaced by replacing the article.

The electric heating element may comprise one or more external heating elements, one or more internal heating elements, or one or more external heating elements and one or more internal heating elements. As used herein, the term "external heating element" refers to a heating element that is positioned outside of the article when in use. As used herein, the term "internal heating element" refers to a heating element that is positioned at least partially within the article when in use.

The one or more external heating elements may comprise an array of external heating elements arranged around the periphery of the heat diffuser, for example on the outer surface of the porous body. In certain examples, the external heating elements extend along the longitudinal direction of the article. With this arrangement, the heating elements may extend along the same direction in which the article is inserted into and removed from a cavity in an aerosol-generating device. This may reduce interference between the heating elements and the aerosol-generating device relative to devices in which the heating elements are not aligned with the length of the article. In some embodiments, the external heating elements extend along the length direction of the article and are spaced apart in the circumferential direction. Where the heating element comprises one or more internal heating elements, the one or more internal heating elements may comprise any suitable number of heating elements. For example, the heating element may comprise a single internal heating element. The single internal heating element may extend along the longitudinal direction of the heat diffuser.

Where the electric heating element forms part of the heat diffuser, the heat diffuser may further comprise one or more electrical contacts by which the electric heating element is connectable to a power source, for example a power source in the aerosol-generating device.

The electric heating element may be an electrically resistive heating element.

The electric heating element may comprise a susceptor in thermal contact with the porous body. The electric heating element may be a susceptor forming part of the heat diffuser. Preferably, the susceptor is embedded in the porous body.

As used herein, the term 'susceptor' refers to a material that can convert electromagnetic energy into heat. When located within a fluctuating electromagnetic field, eddy currents induced in the susceptor cause heating of the susceptor. As the susceptor is in thermal contact with the heat diffuser, the heat diffuser is heated by the susceptor.

In such embodiments, the article is designed to engage with an electrically-operated aerosol-generating device comprising an induction heating source. The induction heating source, or inductor, generates the fluctuating electromagnetic field for heating a susceptor located within the fluctuating electromagnetic field. In use, the article engages with the aerosol-generating device such that the susceptor is located within the fluctuating electromagnetic field generated by the inductor.

The susceptor may be in the form of a pin, rod, or blade. The susceptor preferably has a length of between 5 mm and 15 mm, for example between 6 mm and 12 mm, or between 8 mm and 10 mm. The susceptor preferably has a width of between 1 mm and 5 mm and may have a thickness of between 0.01 mm and 2 mm. for example between 0.5 mm and 2 mm. A preferred embodiment of susceptor may have a thickness of between 10 micrometres and 500 micrometres, or even more preferably between 10 and 100 micrometers. If the susceptor has a constant cross-section, for example a circular cross-section, it has a preferable width or diameter of between 1 mm and 5 mm.

The susceptor may be formed from any material that can be inductively heated to a temperature sufficient to generate an aerosol from the aerosol-forming substrate. Preferred susceptors comprise a metal or carbon. A preferred susceptor may comprise a ferromagnetic material, for example ferritic iron, or a ferromagnetic steel or stainless steel. A suitable susceptor may be, or comprise, aluminium. Preferred susceptors may be formed from 400 series stainless steels, for example grade 410, or grade 420, or grade 430 stainless steel. Different materials will dissipate different amounts of energy when positioned within electromagnetic fields having similar values of frequency and field strength. Thus, parameters of the susceptor such as material type, length, width, and thickness may all be altered to provide a desired power dissipation within a known electromagnetic field.

Preferred susceptors may be heated to a temperature in excess of 250 degrees Centigrade. Suitable susceptors may comprise a non-metallic core with a metal layer disposed on the non-metallic core, for example metallic tracks formed on a surface of a ceramic core.

A susceptor may have a protective external layer, for example a protective ceramic layer or protective glass layer encapsulating the susceptor. The susceptor may comprise a protective coating formed by a glass, a ceramic, or an inert metal, formed over a core of the susceptor.

The heat diffuser may contain a single susceptor. Alternatively, the heat diffuser may comprise more than one susceptor.

The aerosol-forming substrate may be a solid aerosol-forming substrate. Alternatively, the aerosol-forming substrate may comprise both solid and liquid components. The aerosol-forming substrate may comprise tobacco. The aerosol-forming substrate may comprise a tobacco-containing material containing volatile tobacco flavour compounds which are released from the substrate upon heating. The aerosol-forming substrate may comprise a non-tobacco material. The aerosol-forming substrate may comprise tobacco-containing material and non-tobacco containing material.

The aerosol-forming substrate may further comprise an aerosol former that facilitates the formation of a dense and stable aerosol. Examples of suitable aerosol formers are glycerine and propylene glycol.

The aerosol-forming substrate may comprise a solid aerosol-forming substrate. The aerosol-forming substrate may comprise a tobacco-containing material containing volatile tobacco flavour compounds which are released from the substrate upon heating. The aerosol-forming substrate may comprise a non-tobacco material..

The aerosol-forming substrate may include at least one aerosol-former. As used herein, the term 'aerosol former' is used to describe any suitable known compound or mixture of compounds that, in use, facilitates formation of an aerosol. Suitable aerosol formers are substantially resistant to thermal degradation at the operating temperature of the aerosol-generating article. Examples of suitable aerosol formers are glycerine and propylene glycol. Suitable aerosol-formers include, but are not limited to: polyhydric alcohols, such as propylene glycol, triethylene glycol, 1,3-butanediol and glycerine; esters of polyhydric alcohols, such as glycerol mono-, di- or triacetate; and aliphatic esters of mono-, di- or polycarboxylic acids, such as dimethyl dodecanedioate and dimethyl tetradecanedioate. Preferred aerosol formers are polyhydric alcohols or mixtures thereof, such as propylene glycol, triethylene glycol, 1,3-butanediol and, most preferred, glycerine. The aerosol-forming substrate may comprise a single aerosol former. Alternatively, the aerosol-forming substrate may comprise a combination of two or more aerosol formers. The aerosol-forming substrate may have an aerosol former content of greater than 5 percent on a dry weight basis. The aerosol-forming substrate may have an aerosol former content of between approximately 5 percent and approximately 30 percent on a dry weight basis. The aerosol-forming substrate may have an aerosol former content of approximately 20 percent on a dry weight basis.

The aerosol-forming substrate may comprise a liquid aerosol-forming substrate. The liquid aerosol-forming substrate may comprise a nicotine solution. The liquid aerosol-forming substrate preferably comprises a tobacco-containing material comprising volatile tobacco flavour compounds which are released from the liquid upon heating. The liquid aerosol-forming substrate may comprise a non-tobacco material. The liquid aerosol-forming substrate may include water, solvents, ethanol, plant extracts and natural or artificial flavours. Preferably, the liquid aerosol-forming substrate further comprises an aerosol former.

As used herein, the term "liquid aerosol-forming substrate" refers to an aerosol-forming substrate that is in a liquid rather than a solid form. A liquid aerosol-forming substrate may be at least partially absorbed by a liquid retention medium. A liquid-aerosol-forming substrate includes an aerosol-forming substrate in the form of a gel.

In some embodiments, the aerosol-generating article comprises a liquid aerosol-forming substrate and a liquid retention medium for retaining the liquid aerosol-forming substrate.

As used herein, the term "liquid retention medium" refers to a component that is capable of releasably retaining a liquid aerosol-forming substrate. The liquid retention medium may be, or may comprise, a porous or fibrous material that absorbs or otherwise retains a liquid aerosol-forming substrate that it is brought into contact with while allowing the liquid aerosol-forming substrate to be released by vaporisation.

The liquid retention medium preferably comprises an absorbent material, for example an absorbent polymeric material. Examples of suitable liquid retention materials include fibrous polymers and porous polymers such as open-cell foams. The liquid retention medium may comprise a fibrous cellulose acetate or a fibrous cellulose polymer. The liquid retention medium may comprise a porous polypropylene material. Suitable materials capable of retaining a liquid will be known to the skilled person.

The liquid retention medium is either located within an air-flow path through the heated aerosol-generating article or defines at least a portion of an air-flow path through the aerosol-generating article. Preferably, one or more holes defined through the liquid retention medium define a portion of the air-flow path through the heated aerosol-generating article between the distal end of the article and the mouth end of the article.

The liquid retention medium may be in the form of a tube having a central lumen. Walls of the tube would then be formed from, or comprise, a suitable liquid-retention material.

The liquid aerosol-forming substrate be incorporated into the liquid retention medium immediately prior to use. For example, a dose of liquid aerosol-forming substrate may be injected into the liquid retention medium immediately prior to use.

Articles according to the invention may comprise a liquid aerosol-forming substrate contained within a frangible capsule. The frangible capsule may be located between the distal end and the mid-point of the article.

As used herein, the term "frangible capsule" refers to a capsule that is capable of containing a liquid aerosol-forming substrate and releasing the liquid aerosol-forming substrate when broken or ruptured. The frangible capsule may be formed from, or comprise, a brittle material that is easily broken by a user to release its liquid aerosol-forming substrate contents. For example the capsule may be broken by external force such as finger pressure, or by contact with a piercing or rupturing element.

The frangible capsule is preferably spheroid, for example spherical or ovoid, having a maximum dimension of between 2 mm and 8 mm, for example between 4 mm and 6 mm. The frangible capsule may contain a volume of between 20 and 300 microlitres, for example between 30 and 200 microlitres. Such a range may provide between 10 and 150 puffs of aerosol to a user.

The frangible capsule may have a brittle shell, or may be shaped to facilitate rupture when subjected to external force. The frangible capsule may be configured to be ruptured by application of external force. For example, the frangible capsules may be configured to rupture at a specific defined external force, thereby releasing the liquid-aerosol-forming substrate. The frangible capsule may be configured with a weakened or brittle portion of its shell to facilitate rupture. The frangible capsule may be arranged for engagement with a piercing element for breaking the capsule and releasing the liquid aerosol-forming substrate. Preferably the frangible capsule has a burst strength of between about 0.5 and 2.5 kilograms force (kgf), for example between 1.0 and 2.0 kgf.

The shell of the frangible capsule may comprise a suitable polymeric material, for example a gelatin based material. The shell of the capsule may comprise a cellulose material or a starch material.

Preferably, the liquid aerosol-forming substrate is releasably contained within the frangible capsule and the article further comprises a liquid retention medium located in proximity to the frangible capsule for retaining the liquid aerosol-forming substrate within the article after its release from the frangible capsule.

The liquid retention medium is preferably capable of absorbing between 105% and 110% of the total volume of liquid contained within the frangible capsule. This helps to prevent leakage of liquid aerosol-forming substrate from the article after the frangible capsule has been broken to release its contents. It is preferred that the liquid retention medium is between 90% and 95% saturated after release of the liquid aerosol-forming substrate from the frangible capsule.

In preferred embodiments, the aerosol-forming substrate is a liquid aerosol-forming substrate and the article further comprises a frangible capsule containing the liquid aerosol-forming substrate, and a liquid retention medium downstream of the heat diffuser and arranged to absorb the liquid aerosol-forming substrate when the frangible capsule is broken.

The frangible capsule may be located within the porous carrier material. For example, the porous carrier material may. Preferably, the porous carrier material is provided in the form of a liquid retention tube and the frangible capsule is located within the lumen of the tube.

The frangible capsule may be located adjacent to the liquid retention medium within the article such that the liquid-aerosol-forming substrate released from the frangible capsule can contact and be retained by the liquid retention medium. The frangible capsule may be located within the liquid retention medium. For example, the liquid retention medium may comprise a plug of material in which the capsule is embedded. Preferably, article comprises a tubular liquid retention medium and the frangible capsule containing the liquid aerosol-forming substrate is located within the lumen of the tubular liquid retention medium.

Where the aerosol-forming substrate is a solid aerosol-forming substrate, the solid aerosol-forming substrate may be immediately downstream of the heat diffuser. For example, the solid aerosol-forming substrate may abut the heat diffuser. In other embodiments, the solid aerosol-forming substrate may be spaced apart in the longitudinal direction from the heat diffuser.

In certain preferred embodiments, the aerosol-forming substrate is a liquid aerosol-forming substrate and the article further comprises a liquid retention medium for retaining the liquid aerosol-forming substrate. In such embodiments, the liquid retention medium may be immediately downstream of the heat diffuser. For example, the liquid retention medium may abut the heat diffuser. In other embodiments, the liquid retention medium may be spaced apart in the longitudinal direction from the heat diffuser.

In one particular embodiment, the aerosol-forming substrate is a liquid aerosol-forming substrate and the article further comprises a liquid retention medium for retaining the liquid aerosol-forming substrate, the liquid retention medium being spaced apart in the longitudinal direction from the heat diffuser.

With this arrangement, conductive heat transfer between the heat diffuser and the liquid retention medium may be reduced. This may further reduce or prevent areas of local high temperature, or "hot spots", from occurring in the liquid retention medium that may otherwise be caused by conductive heating.

Aerosol-generating articles according to the present invention may further comprise a support element may be located immediately downstream of the aerosol-forming substrate or, where the article comprises a liquid retention medium for retaining a liquid aerosol-forming substrate, immediately downstream of the liquid retention medium. The support element may abut the aerosol-forming substrate or the liquid retention medium.

The support element may be formed from any suitable material or combination of materials. For example, the support element may be formed from one or more materials selected from the group consisting of: cellulose acetate; cardboard; crimped paper, such as crimped heat resistant paper or crimped parchment paper; and polymeric materials, such as low density polyethylene (LDPE). In a preferred embodiment, the support element is formed from cellulose acetate. The support element may comprise a hollow tubular element. For example, the support element comprises a hollow cellulose acetate tube. The support element preferably has an external diameter that is approximately equal to the external diameter of the aerosol-generating article.

The support element may have an external diameter of between approximately 5 millimetres and approximately 12 millimetres, for example of between approximately 5 millimetres and approximately 10 millimetres or of between approximately 6 millimetres and approximately 8 millimetres. For example, the support element may have an external diameter of 7.2 millimetres +/- 10 percent.

The support element may have a length of between approximately 5 millimetres and approximately 15 mm. In a preferred embodiment, the support element has a length of approximately 8 millimetres.

An aerosol-cooling element may be located downstream of the aerosol-forming substrate, for example an aerosol-cooling element may be located immediately downstream of a support element, and may abut the support element. The aerosol-cooling element may be located immediately downstream of the aerosol-forming substrate or, where the article comprises a liquid retention medium for retaining a liquid aerosol-forming substrate, immediately downstream of the liquid retention medium. For example, the aerosol-cooling element may abut the aerosol-forming substrate or the liquid retention medium.

The aerosol-cooling element may have a total surface area of between approximately 300 square millimetres per millimetre length and approximately 1000 square millimetres per millimetre length. In a preferred embodiment, the aerosol-cooling element has a total surface area of approximately 500 square millimetres per millimetre length.

The aerosol-cooling element preferably has a low resistance to draw. That is, the aerosol-cooling element preferably offers a low resistance to the passage of air through the aerosol-generating article. Preferably, the aerosol-cooling element does not substantially affect the resistance to draw of the aerosol-generating article.

The aerosol-cooling element may comprise a plurality of longitudinally extending channels. The plurality of longitudinally extending channels may be defined by a sheet material that has been one or more of crimped, pleated, gathered and folded to form the channels. The plurality of longitudinally extending channels may be defined by a single sheet that has been one or more of crimped, pleated, gathered and folded to form multiple channels. Alternatively, the plurality of longitudinally extending channels may be defined by multiple sheets that have been one or more of crimped, pleated, gathered and folded to form multiple channels.

In some embodiments, the aerosol-cooling element may comprise a gathered sheet of material selected from the group consisting of metallic foil, polymeric material, and substantially non-porous paper or cardboard. In some embodiments, the aerosol-cooling element may comprise a gathered sheet of material selected from the group consisting of polyethylene (PE), polypropylene (PP), polyvinylchloride (PVC), polyethylene terephthalate (PET), polylactic acid (PLA), cellulose acetate (CA), and aluminium foil.

In a preferred embodiment, the aerosol-cooling element comprises a gathered sheet of biodegradable material. For example, a gathered sheet of non-porous paper or a gathered sheet of biodegradable polymeric material, such as polylactic acid or a grade of Mater-Bi® (a commercially available family of starch based copolyesters). In a particularly preferred embodiment, the aerosol-cooling element comprises a gathered sheet of polylactic acid.

The aerosol-cooling element may be formed from a gathered sheet of material having a specific surface area of between approximately 10 square millimetres per milligram and approximately 100 square millimetres per milligram weight. In some embodiments, the aerosol-cooling element may be formed from a gathered sheet of material having a specific surface area of approximately 35 mm²/mg.

The aerosol-generating article may comprise a mouthpiece located at the mouth end of the aerosol-generating article. The mouthpiece may be located immediately downstream of an aerosol-cooling element and may abut the aerosol-cooling element. The mouthpiece may be located immediately downstream of the aerosol-forming substrate or, where the article comprises a liquid retention medium for retaining a liquid aerosol-forming substrate, immediately downstream of the liquid retention medium. In such embodiments, the mouthpiece may abut the aerosol-forming substrate, or the liquid retention medium. The mouthpiece may comprise a filter. The filter may be formed from one or more suitable filtration materials. Many such filtration materials are known in the art. In one embodiment, the mouthpiece may comprise a filter formed from cellulose acetate tow.

The mouthpiece preferably has an external diameter that is approximately equal to the external diameter of the aerosol-generating article. The mouthpiece may have an external diameter of a diameter of between approximately 5 millimetres and approximately 10 millimetres, for example of between approximately 6 millimetres and approximately 8 millimetres. In a preferred embodiment, the mouthpiece has an external diameter of 7.2 millimetres +/- 10%.

The mouthpiece may have a length of between approximately 5 millimetres and approximately 20 millimetres. For example, the mouthpiece may have a length of from about 7 mm to about 12 mm.

The elements of the aerosol-forming article may be circumscribed by an outer wrapper, for example in the form of a rod. The wrapper may circumscribe at least a downstream portion of the heat diffuser. In some embodiments, the wrapper circumscribes the heat diffuser along substantially the entire length of the heat diffuser. The outer wrapper may be formed from any suitable material or combination of materials. Preferably, the outer wrapper is non-porous.

The aerosol-generating article may be substantially cylindrical in shape. The aerosol-generating article may be substantially elongate. The aerosol-generating article may have a length and a circumference substantially perpendicular to the length. The aerosol-forming substrate or a porous carrier material in which the aerosol-forming substrate is absorbed during use, may be substantially cylindrical in shape. The aerosol-forming substrate or the porous carrier material may be substantially elongate. The aerosol-forming substrate, or the porous carrier material, may also have a length and a circumference substantially perpendicular to the length.

The aerosol-generating article may have an external diameter of between approximately 5 millimetres and approximately 12 millimetres, for example of between approximately 6 millimetres and approximately 8 millimetres. In a preferred embodiment, the aerosol-generating article has an external diameter of 7.2 millimetres +/- 10 percent.

The aerosol-generating article may have a total length between approximately 30 mm and approximately 100 mm. In one embodiment, the aerosol-generating article has a total length of approximately 45 mm.

The aerosol-forming substrate or, where applicable, the liquid retention medium, may have a length of between about 7 mm and about 15 mm. In one embodiment, the aerosol-forming substrate, or the liquid retention medium, may have a length of approximately 10 mm. Alternatively, the aerosol-forming substrate, or the liquid retention medium, may have a length of approximately 12 mm.

The aerosol-generating substrate or liquid retention medium, preferably has an external diameter that is approximately equal to the external diameter of the aerosol-generating article. The external diameter of the aerosol-forming substrate, or the liquid retention medium, may be between approximately 5 mm and approximately 12 mm. In one embodiment, the aerosol-forming substrate, or the liquid retention medium, may have an external diameter of approximately 7.2 mm +/- 10 percent.

In use, the heat diffuser preferably heats air drawn through it to between 200 and 220 degrees Celsius. The air preferably cools to about 100 degrees in the aerosol cooling element.

According to a second aspect of the present invention, there is provided a heated aerosol-generating system comprising an electrically operated aerosol-generating device and a heated aerosol-generating article according to any of the embodiments discussed above.

As used herein, the term aerosol-generating device' relates to a device that interacts with an aerosol-forming substrate to generate an aerosol. An electrically operated aerosol-generating device is a device comprising one or more components used to supply energy from an electrical power supply to an aerosol-forming substrate to generate an aerosol.

An aerosol-generating device may be described as a heated aerosol-generating device, which is an aerosol-generating device comprising a heating element. The heating element or heater is used to heat an aerosol-forming substrate of an aerosol-generating article to generate an aerosol, or the solvent-evolving substrate of a cleaning consumable to form a cleaning solvent.

An aerosol-generating device may be an electrically heated aerosol-generating device, which is an aerosol-generating device comprising a heating element that is operated by electrical power to heat an aerosol-forming substrate of an aerosol-generating article to generate an aerosol.

The aerosol-generating device of the aerosol-generating system may comprise: a housing having a cavity for receiving the aerosol-generating article and a controller configured to control the supply of power from a power supply to an electric heating element of the system.

The electric heating element may form part of the aerosol-generating article, part of the aerosol-generating device, or both.

In certain embodiments, the electric heating element forms part of the device.

The electric heating element may comprise one or more heating elements.

In preferred embodiments, the electrically operated aerosol-generating device comprises an electric heating element and a housing having a cavity, and the heated aerosol-generating article is received in the cavity such that the heat diffuser is penetrated by the electric heating element. The heating element may conveniently be shaped as a needle, pin, rod, or blade that may be inserted into the heat diffuser.

Aerosol-generating systems according to the invention include an electric heating element. The electric heating element may comprise one or more external heating elements, one or more internal heating elements, or one or more external heating elements and one or more internal heating elements. As used herein, the term "external heating element" refers to a heating element that is positioned outside of the heat diffuser when an aerosol-generating system comprising the heat diffuser is assembled. As used herein, the term "internal heating element" refers to a heating element that is positioned at least partially within the heat diffuser when an aerosol-generating system comprising the heat diffuser is assembled.

The one or more external heating elements may comprise an array of external heating elements arranged around the inner surface of the cavity. In certain examples, the external heating elements extend along the longitudinal direction of the cavity. With this arrangement, the heating elements may extend along the same direction in which the article is inserted into and removed from the cavity. This may reduce interference between the heating elements and the heat diffuser relative to devices in which the heating elements are not aligned with the length of the cavity. In some embodiments, the external heating elements extend along the length direction of the cavity and are spaced apart in the circumferential direction. Where the heating element comprises one or more internal heating elements, the one or more internal heating elements may comprise any suitable number of heating elements. For example, the heating element may comprise a single internal heating element. The single internal heating element may extend along the longitudinal direction of the cavity.

The electric heating element may comprise an electrically resistive material. Suitable electrically resistive materials include but are not limited to: semiconductors such as doped ceramics, electrically "conductive" ceramics (such as, for example, molybdenum disilicide), carbon, graphite, metals, metal alloys and composite materials made of a ceramic material and a metallic material. Such composite materials may comprise doped or undoped ceramics. Examples of suitable doped ceramics include doped silicon carbides. Examples of suitable metals include titanium, zirconium, tantalum and metals from the platinum group. Examples of suitable metal alloys include stainless steel, Constantan, nickel-, cobalt-, chromium-, aluminium-titanium- zirconium-, hafnium-, niobium-, molybdenum-, tantalum-, tungsten-, tin-, gallium-, manganese- and iron-containing alloys, and super-alloys based on nickel, iron, cobalt, stainless steel, Timetal®, iron-aluminium based alloys and iron-manganese-aluminium based alloys. Timetal® is a registered trade mark of Titanium Metals Corporation, 1999 Broadway Suite 4300, Denver Colorado. In composite materials, the electrically resistive material may optionally be embedded in, encapsulated or coated with an insulating material or vice-versa, depending on the kinetics of energy transfer and the external physicochemical properties required. The heating element may comprise a metallic etched foil insulated between two layers of an inert material. In that case, the inert material may comprise Kapton®, all-polyimide or mica foil. Kapton® is a registered trade mark of E.I. du Pont de Nemours and Company, 1007 Market Street, Wilmington, Delaware 19898, United States of America.

Where the electric heating element comprises a susceptor in thermal contact with the porous body of the heat diffuser, the aerosol-generating device preferably comprises an inductor arranged to generate a fluctuating electromagnetic field within the cavity. ; an electrical power supply connected to the inductor. The inductor may comprise one or more coils that generate a fluctuating electromagnetic field. The coil or coils may surround the cavity.

Preferably the device is capable of generating a fluctuating electromagnetic field of between 1 and 30 MHz, for example, between 2 and 10 MHz, for example between 5 and 7 MHz. Preferably the device is capable of generating a fluctuating electromagnetic field having a field strength (H-field) of between 1 and 5 kA/m, for example between 2 and 3 kA/m, for example about 2.5 kA/m.

Preferably, the aerosol-generating device is a portable or handheld aerosol-generating device that is comfortable for a user to hold between the fingers of a single hand.

The aerosol-generating device may be substantially cylindrical in shape

The aerosol-generating device may have a length of between approximately 70 millimetres and approximately 120 millimetres.

The device may comprise a power supply for supplying electrical power to the electric heating element. The power supply may be any suitable power supply, for example a DC voltage source such as a battery. In one embodiment, the power supply is a Lithium-ion battery. Alternatively, the power supply may be a Nickel-metal hydride battery, a Nickel cadmium battery, or a Lithium based battery, for example a Lithium-Cobalt, a Lithium-Iron-Phosphate, Lithium Titanate or a Lithium-Polymer battery.

The controller may be a simple switch. Alternatively the controller may be electric circuitry and may comprise one or more microprocessors or microcontrollers.

As used herein, the terms 'upstream' and 'downstream' are used to describe the relative positions of elements, or portions of elements, of the aerosol-generating article, or aerosol-generating device, in relation to the direction in which air is drawn through the system during use thereof.

As used herein, the term 'longitudinal' is used to describe the direction between the upstream end and the downstream end of the aerosol-generating article, or an element thereof, or the aerosol-generating device, and the term 'transverse' is used to describe the direction perpendicular to the longitudinal direction.

As used herein, the term 'diameter' is used to describe the maximum dimension in the transverse direction of the aerosol-generating article, or an element thereof, or the aerosol-generating device. As used herein, the term 'length' is used to describe the maximum dimension in the longitudinal direction.

As used herein, the term 'removably coupled' is used to mean that the article and device can be coupled and uncoupled from one another without significantly damaging either component. For example, the article may be removed from the device when the aerosol-forming substrate has been consumed.

Features described in relation to one or more aspects may equally be applied to other aspects of the invention. In particular, features described in relation to the article of the first aspect may be equally applied to the system of the second aspect, and vice versa.

The invention is further described, by way of example only, with reference to the accompanying drawings in which:
Figure 1 shows a schematic longitudinal cross-section of an aerosol-generating article according to a first embodiment of the present invention;
Figure 2 shows a schematic view of an aerosol-generating system according to an embodiment of the invention, the system comprising the aerosol-generating article of Figure 1; and
Figure 3 shows a schematic longitudinal cross-section of an aerosol-generating article according to a second embodiment of the present invention.

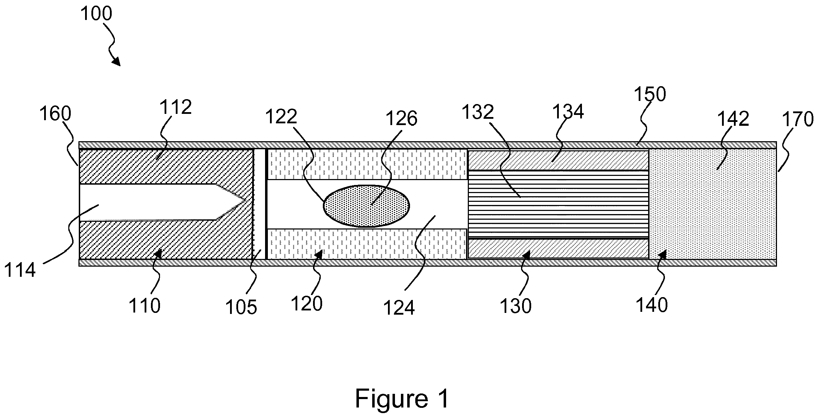

Figure 1 illustrates an aerosol-generating article 100 according to a first embodiment of the invention. The aerosol-generating article 100 comprises four elements arranged in coaxial alignment: a heat diffuser 110, a tubular liquid retention medium 120, an aerosol-cooling element 130, and a mouthpiece 140. Each of these four elements is a substantially cylindrical element, each having substantially the same diameter. These four elements are arranged sequentially and are circumscribed by a non-porous outer wrapper 150 to form a cylindrical rod.

The aerosol-generating article 100 has a distal or upstream end 160 and a proximal or mouth end 170, opposite to the upstream end 160, into which a user inserts into his or her mouth during use. Once assembled, the total length of the aerosol-generating article 200 is about 33 mm about 45 mm and the diameter is about 7.2 mm.

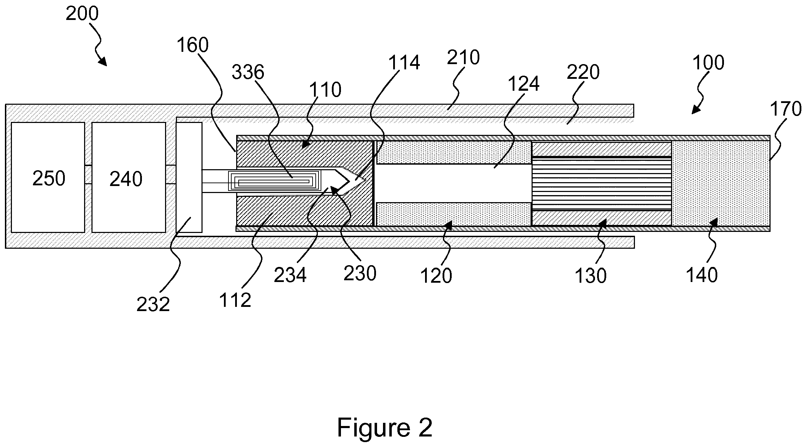

The heat diffuser 110 is located at the extreme distal or upstream end 160 of the aerosol-generating article 100 and includes a porous body 112 in the form of a cylindrical plug of heat storage material. The porous body 112 has a cavity in the form of a slot 114 in its upstream end, which is arranged to receive a blade-shaped heating element, as discussed below in relation to Figure 2. The pores in the porous body 112 are interconnected to form a plurality of air flow passages extending through the porous body 112 from its upstream end to its downstream end.

The tubular liquid retention medium 120 is located downstream of the heat diffuser 110 and is spaced apart from the heat diffuser 110 in the longitudinal direction of the article 100 by a separation 105. This may minimize the extent to which the aerosol-forming segment 120 might be heated by conduction from the heat diffuser 110.

The article 100 further includes a frangible capsule 122 located within the lumen 124 of the liquid retention medium 120. The frangible capsule 122 contains a liquid aerosol-forming substrate 126.

The tubular liquid retention medium 120 has a length of 8 mm and is formed from fibrous cellulose acetate material. The liquid retention medium has a capacity to absorb 35 microlitres of liquid. The lumen 124 of the tubular liquid retention medium 120 provides an air flow path through the liquid retention medium 120 and also acts to locate the frangible capsule 122. The material of the liquid retention medium may be any other suitable fibrous or porous material.

The frangible capsule 122 is shaped as an oval spheroid and has the long dimension of the oval aligned with the axis of the lumen 124. The oval spheroid shape of the capsule may mean that it is easier to break than if it was circular spherical in shape, but other shapes of capsule may be used. The capsule 122 has an outer shell comprising a gelatin based polymeric material surrounding a liquid aerosol-forming substrate.

The liquid aerosol-forming substrate 126 comprises propylene glycol, nicotine extract, and 20 weight percent water. A wide range of flavourants may be optionally added. A wide range of aerosol-formers may be used as alternative, or in addition to, propylene glycol. The capsule is about 4 mm in length and contains a volume of about 33 microlitres of liquid aerosol-forming substrate.

The aerosol-cooling element 130 is located immediately downstream of and abuts the liquid retention medium 120. In use, volatile substances released from the aerosol-forming substrate 126 pass along the aerosol-cooling element 130 towards the mouth end 170 of the aerosol-generating article 100. The volatile substances may cool within the aerosol-cooling element 130 to form an aerosol that is inhaled by the user. In the embodiment illustrated in Figure 1, the aerosol-cooling element 130 comprises a crimped and gathered sheet 132 of polylactic acid circumscribed by a wrapper 134. The crimped and gathered sheet 132 of polylactic acid defines a plurality of longitudinal channels that extend along the length of the aerosol-cooling element 130.

The mouthpiece 140 is located immediately downstream of and abuts the aerosol-cooling element 130. In the embodiment illustrated in Figure 1, the mouthpiece 140 comprises a conventional cellulose acetate tow filter 142 of low filtration efficiency.

To assemble the aerosol-generating article 100, the four cylindrical elements described above are aligned and tightly wrapped within the outer wrapper 150. In the embodiment illustrated in Figure 1, the outer wrapper 150 is formed from a non-porous sheet material. In other examples, the outer wrapper may comprise a porous material, such as cigarette paper.

Figure 2 shows an aerosol-generating system in accordance with an embodiment of the present invention. The aerosol-generating system comprises the aerosol-generating article 100, and an aerosol-generating device 200.

The aerosol-generating device 200 includes a housing 210 defining a cavity 220 for receiving the aerosol-generating article 100. The device 200 further includes a heater 230 comprising a base portion 232 and a heating element in the form of a heater blade 234 that penetrates the heat diffuser 110 so that a portion of the heater blade 234 extends into the slot in the porous body 112 when the article 100 is received in the cavity 220, as shown in Figure 2. The heater blade 234 comprises resistive heating tracks 236 for resistively heating the heat diffuser 110. A controller 240 controls the operation of the device 200, including the supply of electrical current from a battery 250 to the resistive heating tracks 236 of the heater blade 234.

In the example shown in Figure 2, the frangible capsule has been ruptured prior to insertion of the article 100 into the cavity 220 of the device 200. Thus, the liquid aerosol-forming substrate is shown as having been absorbed into the liquid retention medium 120.

During use, the controller 240 supplies electrical current from the battery 250 to the resistive heating tracks 236 to heat the heater blade 234. Thermal energy is then absorbed by the porous body 112 of the heat diffuser 110. Air is drawn into the device 200 through air inlets (not shown) and subsequently through the heat diffuser 110 and along the aerosol-generating article 100 by a user from the distal end 160 to the mouth end 170 of the aerosol-generating article 100. As air is drawn through the porous body 112, the air is heated by the heat stored in the porous body 112 before passing through the tubular liquid retention medium 120 to heat the liquid aerosol-forming substrate in the liquid retention medium 120. Preferably, the air is heated by the heat diffuser to between 200 and 220 degrees Celsius. The air then preferably cools to about 100 degrees as it is drawn through the aerosol cooling element.

During the heating cycle, at least some of the one or more volatile compounds within the aerosol-generating substrate are evaporated. The vaporised aerosol-forming substrate is entrained in the air flowing through the liquid retention medium 120 and condenses within the aerosol-cooling element 130 and the mouthpiece portion 140 to form an inhalable aerosol, which exits the aerosol-generating article 100 at its mouth end 170.

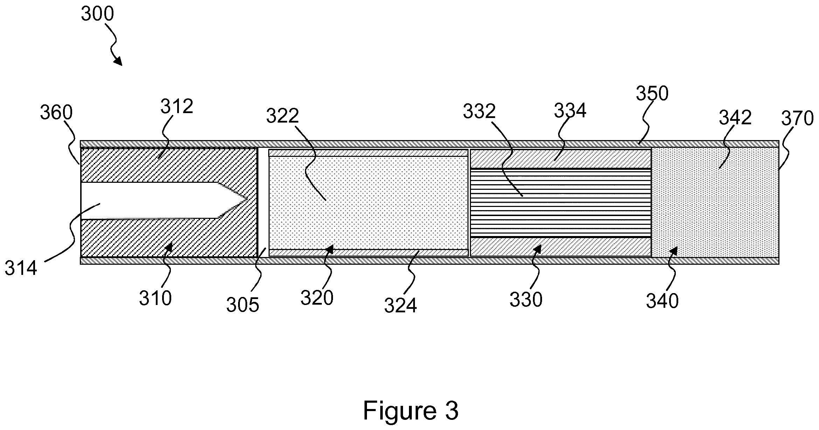

Figure 3 shows an aerosol-generating article 300 according to a second aspect of the present invention. The aerosol-generating article 300 has a similar structure to the aerosol-generating article 100 of Figure 1 and where the same features are present like reference numerals have been used. As with the aerosol-generating article 100 of Figure 1, the aerosol-generating article 300 comprises a heat diffuser 310, ,-an aerosol-cooling element 330, and a mouthpiece 340 arranged in coaxial alignment and circumscribed by a non-porous outer wrapper 350 to form a cylindrical rod: However, unlike the generating article 100 of Figure 1, the aerosol-generating article 300 includes a solid aerosol-forming substrate in the form of a cylindrical plug 320 of homogenised tobacco-based material 322 including an aerosol former such as, for example, glycerine, wrapped in plug wrap 324. As with the liquid retention tube of the first article 100, the aerosol-forming substrate plug 320 is positioned downstream of the heat diffuser 310 and upstream of the aerosol-cooling element 330 and is circumscribed by the wrapper 350. During use, air is drawn through the heat diffuser 310 and the aerosol-forming substrate plug 320. Use of the aerosol-generating article 300 is otherwise the same as discussed above in relation to Figures 1 and 2.

Although the examples shown in Figures 1 and 2 illustrate that the article 100 includes one frangible capsule, in other examples, two or more frangible capsules may be provided.

Furthermore, although the example shown in Figure 2 illustrates the heating element as a heating blade arranged to extend into the heat diffuser, the heating element may be provided as one or more heating elements extending around the periphery of the cavity. Additionally or alternatively, the heating element may comprise a susceptor located within the heat diffuser. For example, a blade-shaped susceptor may be located within the heat diffuser, in contact with the porous body. One or both ends of the susceptor may be sharpened or pointed to facilitate insertion into the heat diffuser.

## Claims

1. An aerosol-generating article (100) for use with an electrically-operated aerosol-generating device (200), the article (100) having a mouth end (170) and a distal end (160) upstream from the mouth end (170), the article (100) comprising:
a heat diffuser (110) at the distal end (160) of the article (100); and
an aerosol-forming substrate (126) downstream of the heat diffuser (110),
wherein the heat diffuser (110) comprises a non-combustible porous body (112) for absorbing heat from an electric heating element such that, in use, air drawn through the aerosol-generating article (100) from the distal end (160) to the mouth end (170) is heated by the heat absorbed in the porous body (112), the porous body (112) being formed from a plug of porous material.

2. An aerosol-generating article (100) according to claim 1, wherein the porous body (112) is formed from a heat storage material.

3. An aerosol-generating article (100) according to claim 2, wherein the porous body (112) is formed from a material having a specific heat capacity of at least 0.5 J/g.K, preferably at least 0.7 J/g.K, more preferably at least 0.8 J/g.K at 25 degrees Celsius.

4. An aerosol-generating article (100) according to claim 2 or claim 3, wherein the porous body (112) is formed from a material selected from a group comprising of glass fibre, glass mat, ceramic, silica, alumina, carbon, and minerals, or any combination thereof.

5. An aerosol-generating article (100) according to any preceding claim, wherein the porous body (112) is thermally conductive.

6. An aerosol-generating article (100) according to claim 5, wherein the porous body (112) is formed from a material having a thermal conductivity of at least 40 W/m.K, preferably at least 100 W/m.K, more preferably at least 150 W/m.K, most preferably at least 200 W/m.K at 23 degrees Celsius and a relative humidity of 50%.

7. An aerosol-generating article (100) according to claim 5 or 6, wherein the porous body (112) is formed from a thermally conductive material selected from a group comprising aluminium, copper, zinc, steel, silver, thermally conductive polymers, or any combination or alloy thereof.

8. An aerosol-generating article (100) according to any preceding claim, wherein the porous body (112) is configured to be penetrated by an electric heating element forming part of an aerosol-generating device (200) when the article (100) is coupled to the aerosol-generating device (200).

9. An aerosol-generating article (100) according to claim 8, wherein the porous body (112) defines a cavity or hole for receiving the electric heating element when the heat diffuser (110) is coupled to the aerosol-generating device (200).

10. An aerosol-generating article (100) according to any preceding claim, further comprising an electric heating element coupled to the heat diffuser (110).

11. An aerosol-generating article (100) according to claim 10, wherein the electric heating element comprises a susceptor embedded in the porous body (112).

12. An aerosol-generating article (100) according to any preceding claim, wherein the aerosol-forming substrate (126) is a liquid aerosol-forming substrate (126) and wherein the article (100) further comprises:
a frangible capsule (122) containing the liquid aerosol-forming substrate (126); and
a porous carrier material downstream of the heat diffuser (110) and arranged to absorb the liquid aerosol-forming substrate (126) when the frangible capsule (122) is broken.

13. An aerosol-generating article (100) according to claim 12, wherein the frangible capsule (122) is located within the porous carrier material.

14. An aerosol-generating article (100) according to any preceding claim, wherein the heat diffuser (110) is spaced apart in a longitudinal direction of the article (100) from the aerosol-forming substrate (126), or the porous carrier material, or both.

15. An aerosol-generating system comprising an electrically operated aerosol-generating device (200) and a heated aerosol-generating article (100) according to any preceding claim.

16. An aerosol-generating system according to claim 15, wherein the electrically operated aerosol-generating device (200) comprises an electric heating element and a housing having a cavity, and wherein the heated aerosol-generating article (100) is received in the cavity such that the heat diffuser (110) is penetrated by the electric heating element.

## Patentansprüche

1. Aerosolerzeugender Artikel (100) zum Gebrauch mit einer elektrisch betriebenen Aerosolerzeugungsvorrichtung (200), wobei der Artikel (100) ein Mundende (170) und ein distales Ende (160) zuströmseitig von dem Mundende (170) hat, wobei der Artikel (100) aufweist:
einen Wärmeverteiler (110) am distalen Ende (160) des Artikels (100); und
ein aerosolbildendes Substrat (126) nachgeschaltet des Wärmeverteilers (110),
wobei der Wärmeverteiler (110) einen nichtbrennbaren porösen Körper (112) zum Absorbieren von Wärme von dem elektrischen Heizelement aufweist, sodass bei dem Gebrauch Luft, die durch den aerosolerzeugenden Artikel (100) von dem distalen Ende (160) zum Mundende (170) gezogen wird, durch die in dem porösen Körper (112) absorbierte Wärme erwärmt wird, wobei der poröse Körper (112) durch einen Einsatz des porösen Materials ausgebildet wird.

2. Aerosolerzeugender Artikel (100) nach Anspruch 1, wobei der poröse Körper (112) aus einem Wärmespeichermaterial gebildet ist.

3. Aerosolerzeugender Artikel (100) nach Anspruch 2, wobei der poröse Körper (112) aus einem Material mit einer spezifischen Wärmekapazität von mindestens 0,5 J/g K, bevorzugt mindestens 0,7 J/g K, mehr bevorzugt mindestens 0,8 J/g K bei 25 Grad Celsius gebildet ist.

4. Aerosolerzeugender Artikel (100) nach Anspruch 2 oder Anspruch 3, wobei der poröse Körper (112) aus einem Material gebildet ist, das aus einer Gruppe ausgewählt ist, die Glasfaser, Glasvlies, Keramik, Siliciumdioxid, Aluminiumoxid, Kohlenstoff und Mineralien oder eine beliebige Kombination davon aufweist.

5. Aerosolerzeugender Artikel (100) nach einem der vorhergehenden Ansprüche, wobei der poröse Körper (112) wärmeleitend ist.

6. Aerosolerzeugender Artikel (100) nach Anspruch 5, wobei der poröse Körper (112) aus einem Material mit einer Wärmeleitfähigkeit von mindestens 40 W/mK, bevorzugt mindestens 100 W/m K, mehr bevorzugt mindestens 150 W/m K, am meisten bevorzugt mindestens 200 W/m K bei 23 Grad Celsius und einer relativen Luftfeuchtigkeit von 50 % gebildet ist.

7. Aerosolerzeugender Artikel (100) nach Anspruch 5 oder 6, wobei der poröse Körper (112) aus einem wärmeleitenden Material gebildet ist, das aus einer Gruppe ausgewählt ist, die Aluminium, Kupfer, Zink, Stahl, Silber, wärmeleitende Polymere oder eine beliebige Kombination oder Legierung davon aufweist.

8. Aerosolerzeugender Artikel (100) nach einem der vorhergehenden Ansprüche, wobei der poröse Körper (112) ausgelegt ist, um von einem elektrischen Heizelement penetriert zu werden, das einen Teil einer Aerosolerzeugungsvorrichtung (200) bildet, wenn der Artikel (100) mit der Aerosolerzeugungsvorrichtung (200) gekoppelt ist.

9. Aerosolerzeugender Artikel (100) nach Anspruch 8, wobei der poröse Körper (112) einen Hohlraum oder ein Loch zur Aufnahme des elektrischen Heizelements definiert, wenn der Wärmeverteiler (110) mit der Aerosolerzeugungsvorrichtung (200) gekoppelt ist.

10. Aerosolerzeugender Artikel (100) nach einem der vorhergehenden Ansprüche, der ferner ein elektrisches Heizelement aufweist, das mit dem Wärmeverteiler (110) gekoppelt ist.

11. Aerosolerzeugender Artikel (100) nach Anspruch 10, wobei das elektrische Heizelement einen Suszeptor aufweist, der in dem porösen Körper (112) eingebettet ist.

12. Aerosolerzeugender Artikel (100) nach einem der vorhergehenden Ansprüche, wobei das aerosolbildende Substrat (126) ein flüssiges aerosolbildendes Substrat (126) ist und wobei der Artikel (100) ferner aufweist:
eine zerbrechliche Kapsel (122), die das flüssige aerosolbildende Substrat (126) enthält; und
ein poröses Trägermaterial nachgeschaltet des Wärmeverteilers (110) und angeordnet, um das flüssige aerosolbildende Substrat (126) zu absorbieren, wenn die zerbrechliche Kapsel (122) aufgebrochen ist.

13. Aerosolerzeugender Artikel (100) nach Anspruch 12, wobei die zerbrechliche Kapsel (122) sich innerhalb des porösen Trägermaterials befindet.

14. Aerosolerzeugender Artikel (100) nach einem der vorhergehenden Ansprüche, wobei der Wärmeverteiler (110) in einer Längsrichtung des Artikels (100) von dem aerosolbildenden Substrat (126) oder dem porösen Trägermaterial oder beiden beabstandet ist.

15. Aerosolerzeugungssystem aufweisend eine elektrisch betriebene Aerosolerzeugungsvorrichtung (200) und einen erwärmten aerosolerzeugenden Artikel (100) nach einem der vorhergehenden Ansprüche.

16. Aerosolerzeugungssystem nach Anspruch 15, wobei die elektrisch betriebene Aerosolerzeugungsvorrichtung (200) ein elektrisches Heizelement und ein Gehäuse mit einem Hohlraum aufweist, und wobei der erwärmte aerosolerzeugende Artikel (100) in dem Hohlraum aufgenommen ist, sodass der Wärmeverteiler (110) von dem elektrischen Heizelement penetriert wird.

## Revendications

1. Article de génération d'aérosol (100) pour une utilisation avec un dispositif électrique de génération d'aérosol (200), l'article (100) ayant une extrémité buccale (170) et une extrémité distale (160) en amont de l'extrémité buccale (170), l'article (100) comprenant :
un diffuseur de chaleur (110) au niveau de l'extrémité distale (160) de l'article (100) ; et
un substrat formant aérosol (126) en aval du diffuseur de chaleur (110),
dans lequel un diffuseur de chaleur (110) comprend un corps poreux non combustible (112) pour absorber la chaleur d'un élément électrique chauffant de telle sorte que, lors de l'utilisation, l'air aspiré à travers l'article de génération d'aérosol (100) depuis l'extrémité distale (160) vers l'extrémité buccale (170) est chauffé par la chaleur absorbée dans le corps poreux (112), le corps poreux (112) étant formé à partir d'un bout-filtre de matière poreuse.

2. Article de génération d'aérosol (100) selon la revendication 1, dans lequel le corps poreux (112) est formé à partir d'une matière de stockage de chaleur.

3. Article de génération d'aérosol (100) selon la revendication 2, dans lequel le corps poreux (112) est formé à partir d'une matière ayant une capacité thermique massique d'au moins 0,5 J/g.K, de préférence d'au moins 0,7 J/g.K, de manière davantage préférée d'au moins 0,8 J/g.K à 25 degrés Celsius.

4. Article de génération d'aérosol (100) selon la revendication 2 ou la revendication 3, dans lequel le corps poreux (112) est formé à partir d'une matière choisie dans un groupe comprenant de la fibre de verre, un mat de verre, une céramique, de la silice, de l'alumine, du carbone et des minéraux, ou toute combinaison de ceux-ci.

5. Article de génération d'aérosol (100) selon l'une quelconque des revendications précédentes, dans lequel le corps poreux (112) est thermoconducteur.

6. Article de génération d'aérosol (100) selon la revendication 5, dans lequel le corps poreux (112) est formé à partir d'une matière ayant une conductivité thermique d'au moins 40 W/m.K, de préférence d'au moins 100 W/m.K, de manière davantage préférée d'au moins 150 W/m.K, le plus préférentiellement d'au moins 200 W/m.K à 23 degrés Celsius et une humidité relative de 50 %.

7. Article de génération d'aérosol (100) selon la revendication 5 ou 6, dans lequel le corps poreux (112) est formé à partir d'une matière thermoconductrice choisie dans un groupe comprenant l'aluminium, le cuivre, le zinc, l'acier, l'argent, des polymères thermoconducteurs, ou toute combinaison ou tout alliage de ceux-ci.

8. Article de génération d'aérosol (100) selon l'une quelconque des revendications précédentes, dans lequel le corps poreux (112) est configuré pour être pénétré par un élément électrique chauffant faisant partie d'un dispositif de génération d'aérosol (200) lorsque l'article (100) est couplé au dispositif de génération d'aérosol (200).

9. Article de génération d'aérosol (100) selon la revendication 8, dans lequel le corps poreux (112) définit une cavité ou un trou pour recevoir l'élément électrique chauffant lorsque le diffuseur de chaleur (110) est couplé au dispositif de génération d'aérosol (200).

10. Article de génération d'aérosol (100) selon l'une quelconque des revendications précédentes, comprenant en outre un élément électrique chauffant couplé au diffuseur de chaleur (110).

11. Article de génération d'aérosol (100) selon la revendication 10, dans lequel l'élément électrique chauffant comprend un suscepteur incorporé au corps poreux (112).

12. Article de génération d'aérosol (100) selon l'une quelconque des revendications précédentes, dans lequel le substrat formant aérosol (126) est un substrat formant aérosol liquide (126) et dans lequel l'article (100) comprend en outre :
une capsule cassable (122) contenant le substrat formant aérosol liquide (126) ; et
une matière véhiculaire poreuse en aval du diffuseur de chaleur (110) et disposée pour absorber le substrat formant aérosol liquide (126) lorsque la capsule cassable (122) est brisée.

13. Article de génération d'aérosol (100) selon la revendication 12, dans lequel la capsule cassable (122) est située à l'intérieur de la matière véhiculaire poreuse.

14. Article de génération d'aérosol (100) selon l'une quelconque des revendications précédentes, dans lequel le diffuseur de chaleur (110) est espacé dans une direction longitudinale de l'article (100) depuis le substrat formant aérosol (126) ou la matière véhiculaire poreuse ou les deux.

15. Système de génération d'aérosol comprenant un dispositif électrique de génération d'aérosol (200) et un article de génération d'aérosol chauffé (100) selon l'une quelconque des revendications précédentes.

16. Système de génération d'aérosol selon la revendication 15, dans lequel le dispositif électrique de génération d'aérosol (200) comprend un élément électrique chauffant et un logement ayant une cavité, et dans lequel l'article de génération d'aérosol chauffé (100) est reçu dans la cavité de telle sorte que le diffuseur de chaleur (110) est pénétré par l'élément électrique chauffant.
